Europäisches Patentamt

European Patent Office

Office européen des brevets

(19)

(11) EP 0 720 788 B1

(12) FASCICULE DE BREVET EUROPEEN

(45) Date de publication et mention
de la délivrance du brevet:
**16.04.1997 Bulletin 1997/16**

(21) Numéro de dépôt: **94927696.8**

(22) Date de dépôt: **19.09.1994**

(51) Int Cl.⁶: **H02N 11/00**, H02N 1/00

(86) Numéro de dépôt international:
**PCT/FR94/01088**

**WO 95/08865 (30.03.1995 Gazette 1995/14)**

(54) **MOTEUR ELECTROSTATIQUE A HAUT RENDEMENT**

ELEKTROSTATISCHER MOTOR MIT HOHEM WIRKUNGSGRAD

HIGH EFFICIENCY ELECTROSTATIC MOTOR

(84) Etats contractants désignés:
**AT BE CH DE DK ES FR GB GR IE IT LI LU NL PT
SE**

(30) Priorité: **20.09.1993 FR 9311171**

(43) Date de publication de la demande:
**10.07.1996 Bulletin 1996/28**

(73) Titulaire: **CORNILLE, Patrick
F-94440 Santeny (FR)**

(72) Inventeur: **CORNILLE, Patrick
F-94440 Santeny (FR)**

(74) Mandataire: **Pinguet, André
CAPRI sàrl,
94, avenue Mozart
75016 Paris (FR)**

(56) Documents cités:
**GB-A- 300 311**

## Description

La présente invention concerne un moteur électrostatique capable de fonctionner à un très haut rendement. Ce moteur est utilisable dans de nombreux domaines tels que pour l'entraînement de toutes sortes de véhicules : automobiles, avions, bateaux, trains, etc.. Il peut également trouver son application dans les centrales de production d'énergie. Le champ d'application de la présente invention touche donc tous les domaines dans lesquels une alimentation en énergie est nécessaire.

Le principe de fonctionnement de ce type de moteurs est basé sur une utilisation particulière de forces électromagnétiques classiques.

Les principes de conservation de l'énergie et de l'impulsion ne sont vérifiées que pour des systèmes fermés où les forces en jeu obéissent au troisième principe de Newton de l'action égale à la réaction. Il s'ensuit la possibilité de systèmes ouverts si les forces en jeu ne suivent pas le troisième principe de Newton ce qui est le cas de la force électromagnétique de Lorentz du fait de la présence du terme magnétique dans l'expression de cette force.

Il s'ensuit qu'une paire de particules chargées en interaction doit pouvoir se mettre en mouvement spontané sans l'aide d'une force extérieure. De la même manière un condensateur chargé sous haute tension doit pouvoir se mouvoir de lui-même. De nombreuses expériences effectuées avec des condensateurs ont effectivement mis en évidence ce phénomène.

En particulier, le brevet anglais n°. 300 311 délivré en 1928 à T.T. BROWN divulgue un moteur rectiligne et circulaire qui exploite ce principe. Cependant, T.T. Brown l'attribue à un effet anti-gravitation résultant de la seule polarisation des condensateurs alors qu'en fait la force développée résulte simplement du jeu des forces électromagnétiques classiques.

Dans une forme de réalisation d'un moteur décrit dans le document susmentionné, les condensateurs sous forme de plaques conducteurs sont disposés radialement autour d'un axe de façon régulière et uniforme. Cette disposition ne permet cependant pas de produire un effet maximal de la force développée. En effet, dans le cas d'une répartition homogène des condensateurs comme le fait Brown, il en résulte que pour trois plaques successives quelconques chargées de manière -, +, -, les forces en jeu se compensent presque totalement.

De plus, dans le moteur de Brown, il n'existe aucun moyen permettant de réguler la vitesse de rotation du rotor.

La présente invention a pour but de définir un moteur exploitant de façon optimale ce phénomène électromagnétique et dont la vitesse de rotation du rotor est parfaitement contrôlable.

Pour ce faire, la présente invention a pour objet un moteur électrostatique comprenant un rotor constitué par un ensemble de condensateurs, lesdits condensateurs étant constitués de plaques métalliques disposées radialement autour d'un axe de rotation et noyées dans un matériau diélectrique, la moitié des plaques étant connectées au pôle positif d'un générateur haute tension alors que l'autre moitié des plaques est connectée au pôle négatif du générateur haute tension, caractérisé en ce que lesdites plaques métalliques disposées radialement présentent des écarts angulaires non constants autour dudit axe de rotation. La somme des forces électromagnétiques induites par les champs générés par les condensateurs résulte ainsi en une composante non nulle.

Avantageusement, le rotor est entouré par un stator constitué par un solénoïde ayant un axe de symétrie commun avec l'axe de rotation du rotor, ledit solénoïde étant parcouru par un courant de sens réversible.

De préférence, les plaques métalliques sont réparties par paire de plaques de tension opposée.

Selon une forme de réalisation avantageuse, les plaques métalliques présentent une épaisseur constante, chaque paire étant séparée par une couche de matériau diélectrique de section sensiblement conique.

En variante, les plaques métalliques présentent une section sensiblement conique, chaque paire étant séparée par une couche de matériau diélectrique d'épaisseur constante.

La présente invention sera maintenant décrite en référence aux dessins annexés donnant à titre d'exemple non limitatif, un mode de réalisation de l'invention. Sur les dessins :

- la figure 1 est une représentation schématique en perspective d'un rotor d'un moteur conforme à la présente invention,
- la figure 2 est une vue en coupe transversale d'une première forme de réalisation d'un moteur conforme à la présente invention,
- la figure 3 est une vue en coupe transversale d'une deuxième forme de réalisation d'un moteur selon l'invention.

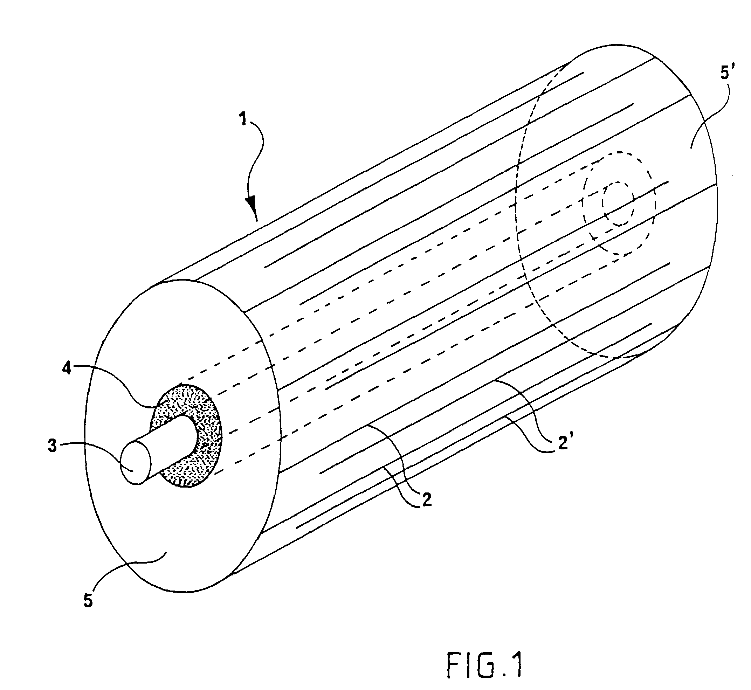

En se référant à la figure 1, on a présenté un rotor cylindrique 1 présentant un axe de rotation 3 entouré par un manchon isolant 4. Le manchon isolant 4 reçoit une pluralité de plaques métalliques 2, 2' disposées radialement le long de l'axe de rotation 3. La moitié des plaques 2 est connectée au pôle positif d'un générateur haute tension (non représenté) alors que l'autre moitié 2' est connectée au pôle négatif de ce même générateur. La connection des différentes plaques 2 reliées au pôle positif du générateur se fait par l'intermédiaire d'un plateau conducteur 5 qui constitue une extrémité du cylindre et sur lequel ces plaques chargées positivement sont fixées. Le plateau 5 est ensuite connecté au pôle positif du générateur haut-tension. Il en est de même pour les plaques 2' chargées négativement par l'intermédiaire d'un plateau d'extrémité 5', comme représenté sur la figure 1. Les plaques 2 et 2' sont disposées de façon alternée autour de l'axe de rotation 3 de façon à créer un ensemble de condensateurs.

L'alimentation haute tension des condensateurs du rotor peut s'effectuer de deux manières différentes : soit par des contacts glissants situés sur chacun des plateaux 5 et 5', soit par deux éclateurs constitués par les plaques métalliques mobiles des plateaux 5, 5' et les plaques métalliques fixes qui sont connectées à la source haute tension et qui font faces aux plateaux. La distance entre chacune des plaques métalliques fixe et mobile qui forme l'éclateur est choisie de manière à produire un court circuit qui permet de charger les condensateurs du rotor.

Selon l'invention, les différentes plaques 2 et 2' sont disposées par paire. Une plaque 2' chargée négativement présente un écart angulaire plus important avec la plaque 2 chargée positivement du condensateur adjacent qu'avec la plaque 2 chargée positivement avec laquelle elle forme un condensateur. Les plaques sont disposées par paire de façon non homogène et l'écart angulaire entre deux plaques adjacentes n'est donc pas constant. Cette caractéristique est essentielle, car elle permet d'obtenir une composante globale de la force développée par l'ensemble du condensateur différente de zéro.

Les différentes plaques 2 et 2' sont d'autre part noyées dans un matériau diélectrique 6 qui a pour but de renforcer l'effet considéré, d'assurer une rigidité du rotor et de diminuer les risques de claquage des condensateurs alimentés sous haute tension.

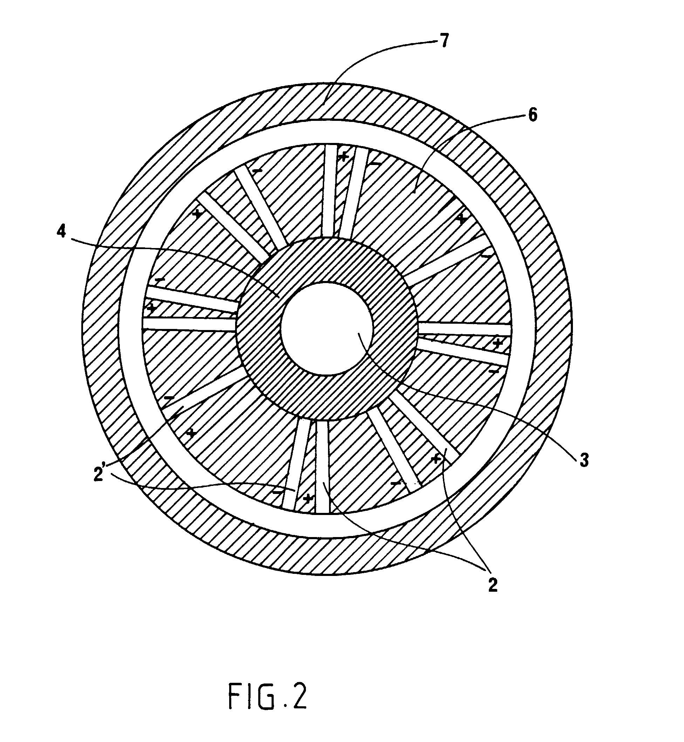

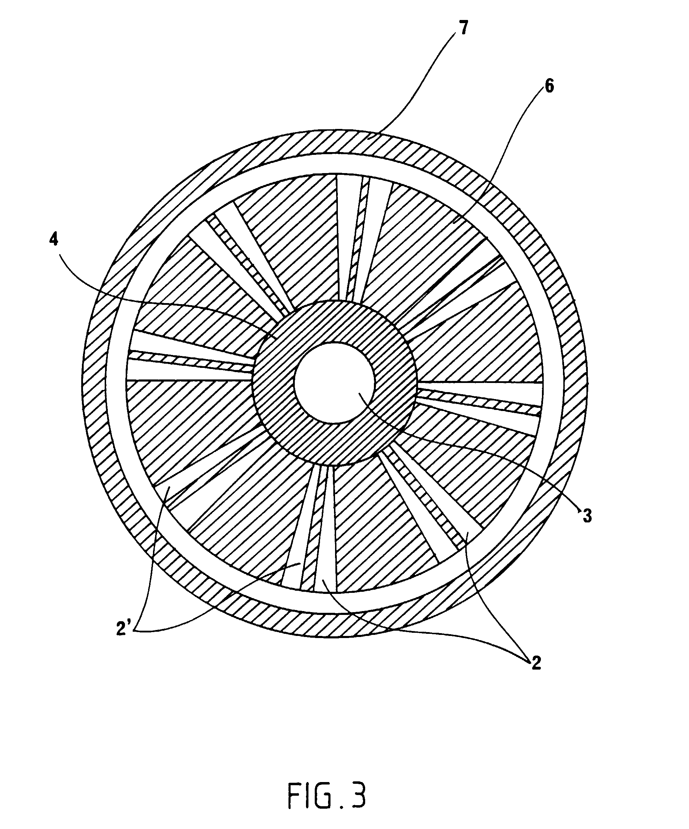

Les figures 2 et 3 représentent deux variantes de réalisation d'un moteur. Dans la forme de réalisation de la figure 2, les plaques 2, 2' ont une épaisseur constante et sont par conséquent séparées par une couche de matériau diélectrique ayant une forme conique en section. La taille ("épaisseur") de la couche diélectrique conique varie également d'une paire de plaque à l'autre.

Dans la forme de réalisation de la figure 3, les plaques 2, 2' présentent une section conique, de sorte que les couches diélectriques les séparant sont d'épaisseur constante.

Le moteur équipé de plaques d'épaisseur constante (figure 2) est très simple à réaliser, car les plaques utilisées sont commercialement disponibles, ce qui réduit considérablement le coût de fabrication du moteur. En revanche, le moteur équipé de plaques de section conique (figure 3) est plus difficile à réaliser, en raison de la géométrie particulière des plaques qui doivent être spécialement moulées ou extrudées. Cependant, cette dernière forme de réalisation procure des résultats supérieurs, c'est pourquoi il sera préféré. Le rendement est plus élevé, car l'épaisseur de la couche de matériau diélectrique est maintenue constante et très faible. La force générée par de tels condensateurs est remarquable, en raison de la relation inversement proportionnelle à la distance séparant les plaques d'un condensateur.

Le rotor est également entouré d'un stator 7 qui est un solénoïde parcouru par un courant dont l'axe de symétrie est commun avec l'axe de rotation 3 du rotor. L'ajout de ce solénoïde 7 a pour but de contrôler la vitesse de rotation du rotor 1. En effet suivant le sens du courant dans le solénoïde, les électrons soumis à la force centrifuge dans les plaques métalliques 2 et 2' subiront une force supplémentaire, il en résultera que ces électrons vont s'ajouter ou se retrancher à l'effet considéré suivant le sens du courant.

Une étude approchée de la force générée entre deux plaques nous donne une estimation de cette force selon la formule:

$$F_G = 2N^2q^2(U.\ V)R/(c^2R^3)$$

où N est le nombre de particules chargées concernées, **U** la vitesse des ions dans l'espace, **V** la vitesse relative des électrons par rapport aux ions. $\mathbf{R} = \mathbf{r_i} - \mathbf{r_c}$ la distance entre les électrons et les ions de chaque plaque d'un condensateur. La formule ci-dessus implique que la force générée $\mathbf{F_G}$ est dirigée dans le sens des charges négatives vers les charges positives.

Il résulte de la formule ci-dessus que pour mettre en vitesse le rotor et obtenir une vitesse appréciable on doit appliquer à l'ensemble des condensateurs une haute tension supérieure 50 KV. Une étude théorique, confirmée par les expériences, montre que ce moteur peut atteindre une vitesse considérable pour une tension appliquée constante pour les raisons suivantes :

- la force centrifuge et la force supplémentaire provenant du solénoïde augmente en fonction du temps le nombre d'électrons (et par voie de conséquence le nombre d'ions) qui participent à l'effet de la force générée qui est donc croissante en fonction du temps.

- la vitesse de rotation du rotor vient s'ajouter à la vitesse **U** des ions dans l'espace qui renforce la force générée.

**Revendications**

1. Moteur électrostatique comprenant un rotor (2, 3, 4, 5, 6) constitué par un ensemble de condensateurs, lesdits condensateurs étant constitués de plaques métalliques (2, 2') disposées radialement autour d'un axe de rotation (3) et noyées dans un matériau diélectrique (6), la moitié des plaques (2) étant connectées au pôle positif d'un générateur haute tension alors que l'autre moitié des plaques (2') est connectée au pôle négatif du générateur haute tension, caractérisé en ce que lesdites plaques métalliques (2, 2') disposées radialement présentent des écarts angulaires non constants autour dudit axe de rotation (3).

2. Moteur électrostatique selon la revendication 1, dans lequel le rotor (2, 3, 4, 5, 6) est entouré par un stator (7) constitué par un solénoïde ayant un axe de symétrie commun avec l'axe de rotation (3) du rotor, ledit solénoïde (7) étant parcouru par un courant de sens réversible.

3. Moteur électrostatique selon la revendication 1 ou la revendication 2, dans lequel la haute tension appliquée par le générateur est supérieure à 50 KV.

4. Moteur électrostatique selon l'une quelconque des revendications précédentes, dans lequel les plaques métalliques (2, 2') sont réparties par paire de plaques de tension opposée.

5. Moteur électrostatique selon l'une quelconque des revendications précédentes, dans lequel les plaques métalliques (2, 2') présentent une épaisseur constante, chaque paire étant séparée par une couche de matériau diélectrique (6) de section sensiblement conique.

6. Moteur électrostatique selon l'une quelconque des revendications 1 à 4, dans lequel les plaques métalliques (2, 2') présentent une section sensiblement conique, chaque paire étant séparée par une couche de matériau diélectrique (6) d'épaisseur constante.

**Patentansprüche**

1. Elektrostatischer Motor, der einen Rotor (2, 3, 4, 5, 6) umfaßt, der von einer Gruppe von Kondensatoren gebildet wird, die von radial um eine Rotationsachse (3) angeordneten und in ein dielektrisches Material (6) eingebetteten, metallischen Platten (2, 2') gebildet werden, wobei die Mitte der einen Platten (2) mit dem positiven Pol eines Hochspannungsgenerators und die Mitte der anderen Platten (2') mit dem negativen Pol des Hochspannungsgenerators verbunden ist, dadurch **gekennzeichnet**, daß die radial angeordneten metallischen Platten (2, 2') um die Rotationsachse (3) herum Winkelabstände aufweisen, die nicht konstant sind.

2. Elektrostatischer Motor nach Anspruch 1, bei dem der Rotor (2, 3, 4, 5, 6) von einem Stator (7) umgeben ist, der von einer elektrischen Wicklung gebildet wird, die eine Symmetrieachse aufweist, die mit der Rotationsachse (3) des Rotors zusammenfällt, wobei die elektrische Wicklung (7) von einem Strom mit umkehrbarer Richtung durchflossen wird.

3. Elektrostatischer Motor nach Anspruch 1 oder 2, bei dem die vom Generator angelegte Hochspannung größer als 50 kV ist.

4. Elektrostatischer Motor nach einem der vorhergehenden Ansprüche, bei dem die metallischen Platten (2, 2') paarweise in Platten mit entgegengesetzter Spannung aufgeteilt sind.

5. Elektrostatischer Motor nach einem der vorhergehenden Ansprüche, bei dem die metallischen Platten (2, 2') eine konstante Dicke aufweisen, wobei jedes Paar von einer Schicht aus dielektrischem Material (6) mit im wesentlichen konischem Querschnitt getrennt ist.

6. Elektrostatischer Motor nach einem der Ansprüche 1 bis 4, bei dem die metallischen Platten (2, 2') einen im wesentlichen konischen Querschnitt besitzen und jedes Paar von einer Schicht aus dielektrischem Material (6) mit konstanter Dicke getrennt ist.

**Claims**

1. An electrostatic motor comprising a rotor (2, 3, 4, 5, 6) constituted by a set of capacitors, said capacitors being constituted by metal plates (2, 2') disposed radially about a rotary shaft (3) and embedded in a dielectric material (6), half of the plates (2) being connected to the positive pole of a high voltage source with the other half of the plates (2') being connected to the negative pole of the high voltage source, the motor being characterized in that said radially-disposed metal plates (2, 2') are at non-constant angular spacing around said rotary shaft (3).

2. An electrostatic motor according to claim 1, in which the rotor (2, 3, 4, 5, 6) is surrounded by a stator (7) constituted by a solenoid having an axis of symmetry that coincides with the axis of the rotary shaft (3), said solenoid (7) conveying a reversible current.

3. An electrostatic motor according to claim 1 or claim 2, in which the high voltage applied by the generator is greater than 50 kV.

4. An electrostatic motor according to any preceding claim, in which the metal plates (2, 2') are distributed in pairs of opposite-voltage plates.

5. An electrostatic motor according to any preceding claim, in which the metal plates (2, 2') are of constant thickness, each pair being separated by a layer of dielectric material (6) of substantially conical section.

6. An electrostatic motor according to any one of claims 1 to 4, in which the metal plates (2, 2') are of substantially conical section, each pair being separated by a layer of dielectric material (6) that is of constant thickness.

FIG.1

FIG.2

FIG.3